# EUROPEAN PATENT APPLICATION

(11) **EP 2 911 336 A1**
(43) Date of publication of application: **26.08.2015**
(21) Application number: 15155325.2
(22) Date of filing: 17.02.2015
(51) Int. Cl.: H04L 12/10, G06F 1/26, G06F 1/32, H04L 12/24, H04L 12/931, H04L 12/935

(54) **Power sourcing equipment and method**

(30) Priority: 25.02.2014 CN 201410064843
(71) Applicant: Huawei Technologies Co., Ltd., Longgang District Shenzhen, Guangdong 518129 (CN)
(72) Inventor: Ma, Zhaoyang, 518129, P.R. Shenzhen (CN)
(74) Representative: Lord, Michael

(57) **Abstract**

Embodiments of the present invention relate to a piece of power sourcing equipment. The power sourcing equipment includes a power supply module (110), a logic device (120), a PSE chip module (130), a control signal superimposer (140), and a switch circuit (150); the power supply module (110) has multiple power supplies, and outputs a power supply alarm signal when at least one of the multiple power supplies is faulty; the logic device (120) acquires, according to the power supply alarm signal, a power supply table corresponding to a power supply fault condition of the power supply module (110), and a first signal about the power-on or power-off status is sent to the first input end of the control signal superimposer (140); the control signal superimposer (140) superimposes the first signal, with a second signal of a power-on or power-off status sent by the PSE chip module (130), and outputs a superimposing result to the switch circuit (150); and the switch circuit (150) controls power supply of the power supply module (110) to the PD.

## Description

### TECHNICAL FIELD

The present invention relates to the circuit field, and in particular, to a piece of power sourcing equipment and a method.

### BACKGROUND

As a Power over Ethernet (English: Power over Ethernet, PoE for short) technology develops, an end user is increasingly dependent on a powered device (English: powered device, PD for short). The PoE technology includes a part: power management. Power management refers to management of power-on (English: power-on) and power-off (English: power-off) of a PD device according to a priority and power consumption of the PD in a case of a power source fault, so as to reduce impact of the fault.
A type of power sourcing equipment (English: power sourcing equipment, PSE for shot) implements power-on and power-off of a PD by using software. This type of power sourcing equipment powers off a PD by performing writing into a register of a PSE chip. Generally, the PSE chip supports only an Inter-Integrated Circuit (English: Inter-Integrated Circuit, IIC for short) bus. The IIC bus has a low rate and a low priority. Power-off by using this manner features slow speed, and time spent on an entire process is long. When some of multiple power sources are faulty, because of time spent on a process of controlling power-off of some PDs with a low priority, power-off of the PSE and all PDs is caused due to that remaining working power supplies are in an overcurrent state and further cause protection.

### SUMMARY

Tthe present invention provide a piece of power sourcing equipment, which solves a problem that power-off of all PDs may be caused by a fault of some power supplies.

According to a first aspect, the present invention provides a piece of power sourcing equipment, where the equipment includes a power supply module, a logic device, a PSE chip module, a control signal superimposer, and a switch circuit, where:
an output end that is of the power supply module and for outputting a power supply alarm signal is connected to an input end of the logic device, an output end of the logic device is connected to a first input end of the control signal superimposer, the PSE chip module is connected to a second input end of the control signal superimposer, and an output end of the control signal superimposer is connected to the switch circuit; and
the power supply module has multiple power supplies, and outputs a power supply alarm signal to the logic device when at least one of the multiple power supplies is faulty; the logic device acquires, according to the power supply alarm signal, a power supply table corresponding to a power supply fault condition of the power supply module, the power supply table include a power-on or power-off status of a powered device PD, and a first signal about the power-on or power-off status is sent to the first input end of the control signal superimposer; the control signal superimposer superimposes the first signal of the power-on or power-off status sent by the logic device, with a second signal of a power-on or power-off status sent by the PSE chip module, and outputs a superimposing result to the switch circuit; and the switch circuit controls, according to the superimposing result, power supply of the power supply module to the PD.

With reference to the first aspect, in a first possible implementation manner of the first aspect, the number of the power supply tables is multiple, each of the power supply tables corresponds to one of a set of power supply fault conditions of the power supply module, each of the power supply tables include multiple port numbers, and a power-on or power-off status of a PD corresponding to each port number among the multiple port numbers.
With reference to the first aspect or the first possible implementation manner of the first aspect, in a second possible implementation manner of the first aspect, the power sourcing equipment further includes a processor, and the power supply tables are sent by the processor to the logic device; or
the power supply tables are generated by the logic device through computation. With reference to the first aspect or the first possible implementation manner of the first aspect or the second possible implementation manner of the first aspect, in a third possible implementation manner of the first aspect, the control signal superimposer is an AND gate. With reference to the first aspect or first possible implementation manner of the first aspect or the second possible implementation manner of the first aspect or the third possible implementation manner of the first aspect, in a fourth possible implementation manner of the first aspect, the switch circuit is one or multiple of: a MOSFET, a JFET, and a BJT.
With reference to the first aspect or first possible implementation manner of the first aspect or the second possible implementation manner of the first aspect or the third possible implementation manner of the first aspect or the fourth possible implementation manner of the first aspect, in a fifth possible implementation manner, the equipment includes multiple network interface connectors, the number of the network interface connectors is the same as the number of ports of the logic device, the number of the network interface connectors is the same as the number of the switch circuits, the number of the network interface connectors is the same as a sum of the number of output ends of all PSE chips in the PSE chip module, and the number of the network interface connectors is the same as the number of the control signal superimposers.
According to a second aspect, the present invention provides a power supply method, applied to a piece of power sourcing equipment, where the power sourcing equipment includes a power supply module, a logic device, a PSE chip module, a control signal superimposer, and a switch circuit, and the method includes:
connecting to, by an output end that is of the power supply module and for outputting a power supply alarm signal, an input end of the logic device;
connecting to, by an output end of the logic device, a first input end of the control signal superimposer; connecting to, by the PSE chip module, a second input end of the control signal superimposer; and connecting to, by an output end of the control signal superimposer, the switch circuit; and
having, by the power supply module, multiple power supplies, and outputting a power supply alarm signal to the logic device when at least one of the multiple power supplies is faulty; acquiring, by the logic device, according to the power supply alarm signal, a power supply table corresponding to a power supply fault condition of the power supply module, where the power supply table includes a power-on or power-off status of a PD; sending a first signal about the power-on and power-off status to the first input end of the control signal superimposer; superimposing, by the control signal superimposer, the first signal of the power-on or power-off sent by the logic device, with a second signal of a power-on or power-off status sent by the PSE chip module, and outputting a superimposing result to the switch circuit; and controlling, by the switch circuit, according to the superimposing result, power supply of the power supply module to the PD.
With reference to the second aspect, in a first possible implementation manner of the second aspect, the power sourcing equipment further includes a processor, and the method further includes:
acquiring, by the processor, PoE power supply power and PD power; determining, according to PoE power supply power, and PD power that correspond to each type of the power supply fault condition, and a priority of each PD, a power-on or power-off status of a PD corresponding to each type of the power supply fault condition; generating multiple power supply tables; and sending, by the processor, the multiple power supply tables to the logic device; or
obtaining, by the processor, according to a priority of each PD and a correspondence between each PD and each port, a priority of each port; sending, to the logic device, the PoE power supply power, PD power, and a port number that correspond to each type of the power supply fault condition, and the priority of each port; determining, by the logic device, according to the PoE power supply power, the PD power, and the port number that correspond to each type of the power supply fault condition, and the priority of each port, a power-on or power-off status of a PD corresponding to each type of the power supply fault condition; and generating multiple power supply tables.
With reference to the first possible implementation manner of the second aspect, in a second possible implementation manner of the second aspect, the acquiring, by the processor, PoE power supply power specifically includes:
acquiring, by the processor, the PoE power supply power by sending a query instruction to each power supply in the power supply module, or reading, by the processor, PoE power supply power preset in an NVM.
With reference to the first possible implementation manner of the second aspect, in a third possible implementation manner of the second aspect, the method further includes:
preconfiguring, by a user, the priority of the port, storing the priority in the power sourcing equipment, and implementing, by the processor, recognition of the port number by using cabling and logical code of the logic device during a layout; and storing, by the user, priority information of the PD in the PD, and acquiring, by the PSE, the priority stored in the PD when the PD communicates with the PSE.
Therefore, according to the power sourcing equipment and method provided in the present invention, when power of a system power supply of a piece of PSE equipment is insufficient, power supply is preferentially ensured for a PD device with a high priority, and a PD is powered off according to a priority from low to high. On one hand, this avoids that power-off of an entire network is caused by a fault of some power supplies of the PSE. On the other hand, when a system can meet only a power requirement of some PDs, a power supply requirement is ensured for a PD with a high priority.

### BRIEF DESCRIPTION OF DRAWINGS

FIG. 1 is a structural diagram of a piece of power sourcing equipment according to an embodiment of the present invention;
FIG. 2 is a type of implementation of the embodiment shown in FIG. 1 according to the present invention;
FIG. 3a is a power supply table when a power supply X and a power supply Y are normal, according to an embodiment of the present invention;
FIG. 3b is a power supply table when a power supply X is normal and a power supply Y is faulty, according to an embodiment of the present invention; and
FIG. 3c is a power supply table when a power supply X is faulty and a power supply Y is normal, according to an embodiment of the present invention;

### DESCRIPTION OF EMBODIMENTS

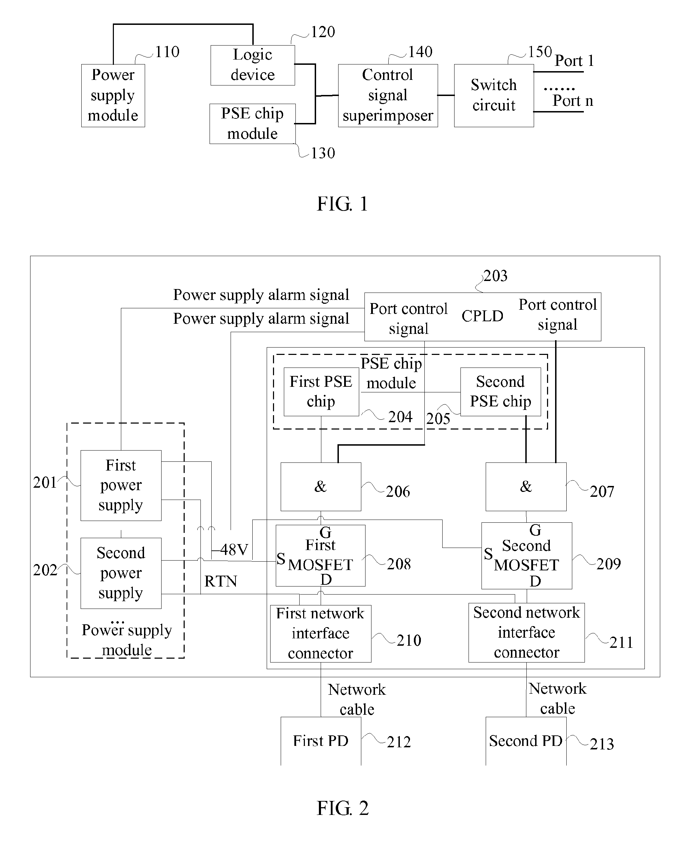

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.
The following uses FIG. 1 as an example to describe in detail a piece of power sourcing equipment provided in an embodiment of the present invention. FIG. 1 is a structural diagram of the power sourcing equipment according to this embodiment of the present invention.
As shown in FIG. 1, the power sourcing equipment includes a power supply processing circuit, and the power supply processing circuit includes a power supply module 110, a logic device 120, a PSE chip module 130, a control signal superimposer 140, and a switch circuit 150.
An output end that is of the power supply module 110 and for outputting a power supply alarm signal is connected to an input end of the logic device 120, an output end of the logic device 120 is connected to a first input end of the control signal superimposer 140, the PSE chip module 130 is connected to a second input end of the control signal superimposer 140, and an output end of the control signal superimposer 140 is connected to an input end of the switch circuit 150. The power supply module 110 includes multiple power supplies. The power supply module 110 outputs a power supply alarm signal to the logic device 120 in a case in which at least one of the multiple power supplies is faulty. Specifically, each power supply in the multiple power supplies outputs an independent power supply alarm signal to the logic device 120 in a case in which each power supply is faulty. Alternatively, the power supply module 110 outputs an integrated power supply alarm signal to the logic device 120, where the integrated power supply alarm signal includes information about whether each power supply of the multiple power supplies is faulty. The logic device 120 is configured to determine a power-on or power-off status of each PD according to the power supply alarm signal (the independent power supply alarm signals or the integrated power supply alarm signal), and send a first signal about the power-on or power-off status of each PD to the first input end of the control signal superimposer 140. In the first signal about the power-on or power-off status of each PD sent by the logic device 120, a first power-on signal may be used to indicate that a PD is powered on, and a first power-off signal may be used to indicate that a PD is powered off. The PSE chip module 130 in PoE includes one or multiple PSE chips, and the PSE chip is a chip designed to be used to meet a requirement of the Power over Ethernet protocol. The PSE chip may provide the following functions: PD detection, PD classification, overcurrent protection, and the like. The PSE chip module 130 sends a second signal of the power-on or power-off status of each PD to the second input end of the control signal superimposer 140. In the second signal of the power-on or power-off status of each PD sent by the PSE chip module 130, a second power-on signal may be used to indicate that a PD is powered on, and a second power-off signal may be used to indicate that a PD is powered off. The control signal superimposer 140 is configured to superimpose the first signal about the power-on or power-off status of each PD sent by the logic device 120 and the second signal about the power-on or power-off status of each PD sent by the PSE chip module 130, and send, to the input end of the switch circuit 150, a third signal of the power-on or power-off status of each PD obtained through superimposing. In the third signal of the power-on or power-off status of each PD, a third power-on signal may be used to indicate that a PD is powered on, and a third power-off signal may be used to indicate that a PD is powered off. Specifically, the first power-on signal is superimposed with the second power-on signal to become the third power-on signal, the first power-off signal is superimposed with the second power-on signal to become the third power-off signal, the first power-off signal is superimposed with the second power-on signal to become the third power-off signal, and the first power-off signal is superimposed with the second power-off signal to become the third power-off signal. For example, when each of the logic device 120 and the PSE chip module 130 has three outputs, the three outputs of the logic device 120 are as follows in sequence: a first signal A1 of a power-on or power-off status of a first PD, a first signal A2 of a power-on or power-off status of a second PD, and a first signal A3 of a power-on or power-off status of a third PD. The three outputs of the PSE chip module 130 are as follows in sequence: a second signal B1 of a power-on or power-off status of the first PD, a second signal B2 of a power-on or power-off status of the second PD, and a second signal B3 of a power-on or power-off status of the third PD. The three outputs of the logic device 120 and the three outputs of the PSE chip module 130 are superimposed, that is, the A1 and B1 are superimposed, A2 and B2 are superimposed, and A3 and B3 are superimposed. An example in which the A1 and the B1 are superimposed is used. When the A1 is the first power-on signal and B1 is the second power-on signal, the third signal of the power-on or power-off status of the first PD outputted by the control signal superimposer 140 is the third power-on signal. Similarly, when the A1 is the first power-on signal and the B1 is the second power-off signal, the control signal superimposer 140 outputs the third power-off signal. When the A1 is the first power-off signal and the B1 is the second power-on signal, the control signal superimposer 140 outputs the third power-off signal. When the A1 is the first power-off signal and the B1 is the second power-off signal, the control signal superimposer 140 outputs the third power-off signal. Superimposing results of superimposing of the A2 and the B2 and superimposing of the A3 and the B3 are similar to superimposing of the A1 and the B1. The switch circuit 150 is configured to, according to the third signal of the power-on or power-off status of each PD sent by the control signal superimposer 140: in a case in which a third signal of a PD is the third power-on signal, switch on power supply of the power supply module 110 to the PD; and in a case in which the third signal of the PD is the third power-off signal, switch off the power supply of the power supply module 110 to the PD. Further, a working process is as follows:
A processor generates, according to the number of power supplies in the power supply module 110 and PoE power supply power of each power supply of the multiple power supplies in the power supply module 110, multiple power supply tables, and places the multiple power supply tables into the logic device 120; or the processor sends, to the logic device 120, related parameters (for example, PoE power supply power, PD power, a port number, and a port priority) for generating power supply tables, and the logic device 120 generates multiple power supply tables. The power supply tables are tables that correspond to each power supply fault condition of the power supply module 110, and each power supply table includes a power-on or power-off status of a PD. The power supply fault condition of the power supply module 110 refers to a set of power supply fault conditions of the multiple power supplies in the power supply module 110. A power supply fault condition of any power supply in the multiple power supplies has two possible values, that is, normal and faulty. For example, the power supply module 110 includes two power supplies, and the two power supplies are a power supply A and a power supply B. If 1 is used to indicate that a value of a power supply fault condition is normal and 0 is used to indicate that the value of the power supply fault condition is faulty, a power supply fault condition {the power supply A, the power supply B} of the power supply module 110 has four values: {0,0}, {0,1}, {1,0}, and {1,1}. If both the power supply A and the power supply B are faulty, that is, the power supply fault condition of the power supply module 110 is {0,0}, no power is supplied to all PDs. Therefore, a power supply table corresponding to that the power supply fault condition of the power supply module 110 is that all power supplies are faulty, that is, {0,0}, may not be generated. Therefore, if the number of the multiple power supplies in the power supply module 110 is n, the number of the power supply tables is generally 2ⁿ or 2ⁿ-1. The multiple power supply tables are multiple tables in the logic device 120, and each power supply table includes two items of content, that is, multiple port numbers and a power-on or power-off status of each port in the multiple port numbers. "ON" may be used to indicate a power-on status of each port, and "OFF" may be used to indicate a power-off status of each port, where one port corresponds to one PD. After a PD connects to a port, a detection function of each PSE chip in the PSE chip module 130 for the PD can determine a correspondence between the PD and a port. Multiple power supply tables separately correspond to each type of power supply fault condition of the power supply module 110. Before the logic device receives the power supply alarm signal, the power supply tables are preset by the processor in the logic device 120. The logic device 120 receives the power supply alarm signal; determines, according to the power supply alarm signal, a current power supply fault condition of the power supply module 110; determines a power supply table corresponding to the power supply fault condition; and according to a power-on or power-off status of a port in the power supply table, when the port is the power-on status, sends the first power-on signal to the port, and when the port is the power-off status, sends the first power-off signal to the port. Each power supply in the multiple power supplies outputs an independent power supply alarm signal to the logic device 120 when each power supply is faulty, or the power supply module 110 outputs an integrated power supply alarm signal to the logic device 120. In this case, the logic device 120 determines a power supply table corresponding to the power supply alarm signal, sends the first power-off signal to a port corresponding to a power-off status of the port pre-computed in the determined power supply table, and sends the first power-on signal to a port corresponding to a power-on status of the port. The first power-on signal or the first power-off signal sent by the logic device 120 is inputted to the first input end of the control signal superimposer 140, the second power-on signal or the second power-off signal sent by the PSE chip module 130 is inputted to the second input end of the control signal superimposer 140. When the logic device 120 outputs the first power-off signal or the PSE chip module 130 outputs the second power-off signal, the control signal superimposer 140 outputs the third power-off signal. When the logic device 120 outputs the first power-on signal and the PSE chip module 130 outputs the second power-on signal, the control signal superimposer 140 outputs the third power-on signal. The control signal superimposer 140 sends the third power-on signal or the third power-off signal to the switch circuit 150. The switch circuit 150 connects the power supply module 110 to supply power for the PD according to the third power-on signal sent by the control signal superimposer 140, or cuts off the power supply of the power supply module 110 to the PD according to the third power-off signal sent by the control signal superimposer 140.
The logical device may be an application-specific integrated circuit (English: application-specific integrated circuit, ASIC for short) or a programmable logic device (English: programmable logic device, PLD for short). The PLD may be a complex programmable logic device (English: complex programmable logic device, CPLD for short), a field-programmable gate array (English: field-programmable gate array, FPGA for short), a generic array logic (English: generic array logic, GAL for short), or a combination thereof The switch circuit 150 may be a metal-oxide-semiconductor field-effect transistor (English: metal-oxide-semiconductor field-effect transistor, MOSFET for short), a junction gate field-effect transistor (English: junction gate field-effect transistor, JFET for short), or a bipolar junction transistor (English: bipolar junction transistor, BJT for short), or the like. The PSE chip module 130 is a PSE, in the PoE, designed to be used to meet a requirement of an IEEE 802.3 protocol. The PSE chip module 130 includes one or multiple PSE chips. For example, the PSE chip module 130 supports eight PoE ports, and the PSE chip module 130 may include two 4-channel PSE chips, may include eight 1-channel PSE chips, and may also include one 8-channel PSE chip. The PSE chip may be MAX5965, MAX5971, or MAX5980, or the like of Maxim Integrated (English: Maxim Integrated), may also be TPS23851, or TPS23861, or the like of Texas Instruments (English: Texas Instruments), and may further be LTC4259, LTC4263, LTC4270, LTC4266, or LTC4274, or the like of Linear Technology (English: Linear Technology).
FIG. 2 is one implementation of the embodiment shown in FIG. 1 according to the present invention. In FIG. 2, the logic device is a CPLD, the control signal superimposer is an AND gate, the switch circuit is a MOSFET, and the PSE chip module includes two single-channel PSE chips: a first PSE chip and a second PSE chip. The power supply module includes two power supplies, and the two power supplies are a first power supply and a second power supply, respectively. As shown in FIG. 2, the power supply processing circuit includes the first power supply 201, the second power supply 202, the CPLD 203, the first PSE chip 204, the second PSE chip 205, a first AND gate 206, a second AND gate 207, a first MOSFET 208, a second MOSFET209, a first network interface connector 210, and a second network interface connector 211.
The power supply module includes the first power supply 201 and the second power supply 202. Both a first output end of the first power supply 201 and a first output end of the second power supply 202 are connected to the CPLD203, and both the first output end of the first power supply 201 and the first output end of the second power supply 202 are output ends of a power supply alarm signal. In a case in which the first power supply 201 is faulty, the first output end of the first power supply 201 outputs the power supply alarm signal. In a case in which the second power supply 202 is faulty, the first output end of the second power supply 202 outputs the power supply alarm signal. Power supply alarm signals of the multiple power supplies in the power supply module may be signals of a same type, and may also be signals of a different type. Second output ends of the first power supply 201 and the second power supply 202 are -48V power supplies, and third output ends of the first power supply 201 and the second power supply 202 are -48V return (English: Return, RTN for short) paths. The first power supply 201 and second power supply 202 are connected in parallel, the first output end of the first power supply 201 is connected to a first input end of the CPLD 203, and the first output end of the second power supply 202 is connected to a second input end of the CPLD 203. The second output end of the first power supply 201 and the second output end of the second power supply 202 are both connected to a source electrode of the first MOSFET 208 and a source electrode of the second MOSFET 209. The third output end of the first power supply 201 and the third output end of the second power supply 202 are both connected to an input end of the first network interface connector 210 and an input end of the second network interface connector 211.
A first output end of the CPLD 203 is connected to a first input end of the first AND gate 206, and a second output end of the CPLD 203 is connected to a first input end of the second AND gate 207; a first output end of the first PSE chip 204 is connected to a second input end of the first AND gate 206, a first output end of the second PSE chip 205 is connected to a second input end of the second AND gate 207, an output end of the first AND gate 206 is connected to a gate electrode of the first MOSFET 208, an output end of the second AND gate 207 is connected to a gate electrode of the second MOSFET 209; and a drain electrode of the first MOSFET 208 is connected to the first network interface connector 210, and a drain electrode of the second MOSFET209 is connected to the second network interface connector 211.
The first PD212 and the second PD213 may be respectively connected to the first network interface connector 210 and the second network interface connector 211 by using a network cable, the network interface connector may be a 8 position 8 contact (English: 8 position 8 contact, 8P8C for short) modular jack (English: modular jack), that is an RJ-45 jack, where RJ is an acronym of registered jack (English: registered jack).
Further, a working process is as follows:
The processor generates three power supply tables according to PoE power supply power of the first power supply 201 and PoE power supply power of the second power supply 202, and places the three power supply tables into the CPLD 203; or the processor sends the related parameters for generating the power supply tables to the CPLD 203, and the CPLD 203 generates the three power supply tables. The three power supply tables respectively correspond to the following: the first power supply 201 is faulty, and the second power supply is normal; the first power supply is normal, and the second power supply is faulty; and the first power supply is normal, and the second power supply is normal. In a case in which the CPLD 203 receives an independent or integrated power supply alarm signal and determines a faulty power supply corresponding to the independent or integrated power supply alarm signal, a power supply table preset in the CPLD 203 is queried, a power supply table corresponding to the faulty power supply is determined, and a PD that cannot be powered by a PoE power supply and is pre-computed in the power supply table is quickly switched off. When the first power supply 201 or the second power supply 202 is faulty, the faulty power supply sends an alarm signal to the CPLD 203. In this case, the CPLD 203 determines a power supply table corresponding to the faulty power supply, and sends a first power-off signal to the first AND gate 206 or the second AND gate 207 corresponding to a PD that cannot be powered by a PoE power supply in the determined power supply table. In this case, an example in which a first power-on signal is a high electrical level and the first power-off signal is a low electrical level is used as an example. The CPLD 203 outputs two outputs. The first output sends a low electrical level or a high electrical level to the first input end of the first AND gate 206, and the second output sends a low electrical level or a high electrical level to the first input end of the send AND gate 207. The first PSE chip 204 and the second PSE chip 205 send a second power-on signal or a second power-off signal. An example in which the second power-on signal is a high electrical level and the second power-off signal is a low electrical level is used.

The first PSE chip 204 sends a high electrical level or a low electrical level to the second input end of the first AND gate 206, and the second PSE 205 sends a high electrical level or a low electrical level to the second input end of the second AND gate 207. The first AND gate 206 superimposes the high electrical level or the low electrical level sent by the first output of the CPLD 203 with a high electrical level or a low electrical level sent by the first PSE chip 204. The second AND gate 207 superimposes the high electrical level or low electrical level sent by the second output of the CPLD 203 with the high electrical level or the low electrical level sent by the second PSE chip 205. An example in which "1" is a high electrical level and "0" is a low electrical level is used. There are four cases for inputs of the first AND gate 206, that is, {1,1}, {1,0}, {0,1}, and {0,0}. There are four cases for inputs of the second AND gate 207, that is, {1,1}, {1,0}, {0,1}, and {0,0}. The first AND gate 206 and the second AND gate 207 sends a superimposed signal to the gate electrode of the first MOSFET 208 and the gate electrode of the second MOSFET209. The first MOSFET 208 and the second MOSFET 209 perform conduction or cut-off of the first MOSFET 208 and the second MOSFET209 according to the superimposed signal. In a case in which output of the first AND gate 206 is a high electrical level, the first MOSFET 208 is active (English: active). In a case in which the output of the first AND gate 206 is a low electrical level, the first MOSFET 208 is cutoff (English: cutoff). In a case in which output of the second AND gate 207 is a high electrical level, the second MOSFET 209 is active. In a case in which the output of the second AND gate 207 is a low electrical level, the second MOSFET 209 is cutoff. When the first MOSFET 208 or the second MOSFET 209 is cutoff, the first network interface connector 210 cannot obtain a current from the PoE power supply and stops supplying power to the first PD 212 that is of the first network interface connector 210. When the second MOSFET 209 is cutoff, the second network interface connector 211 cannot obtain a current from the PoE power supply and stops supplying power to the second PD 213.

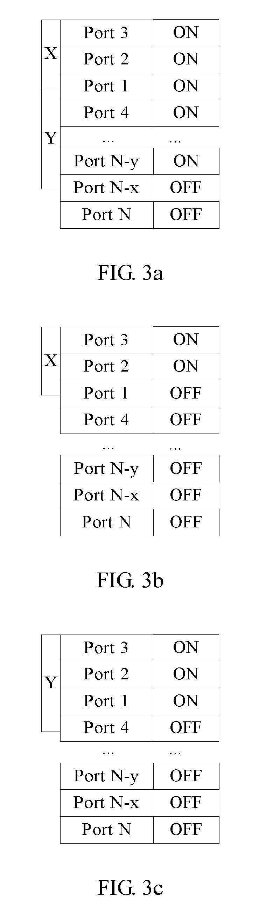

FIG. 3a to FIG. 3c are power supply tables in a CPLD according to an embodiment of the present invention. In FIG. 3a, both a power supply X and a power supply Y supplies power normally. In FIG. 3b, the power supply Y is faulty, and only the power supply X supplies power. In FIG. 3c, the power supply X is faulty, and only the power supply Y supplies power.

A process of creating a power supply table may include:
The processor obtains, through computation, a power supply table and sends the power supply table to a logic device.
Specifically, the processor acquires PoE power supply power and PD power. When a system has n power supplies, the processor may acquire the PoE power supply power by sending a query instruction to the n power supplies. Alternatively, the processor may also read PoE power supply power of the n power supplies preset in a non-volatile memory (English: non-volatile memory, NVM for short). In this case, when a device including the power supply processing circuit is delivered from a factory, PoE power supply power of each power supply in the device is stored in the NVM. A PSE chip classifies a PD, and determines a power class of the PD. The processor acquires PD power class information that includes the PD power. Alternatively, the PSE chip acquires the PD power class information by using packet communication, and the processor acquires the PD power class information that includes the PD power. According to a port number and a port priority that are acquired in advance, the processor computes, when a power supply module has n power supplies and at least one power supply in the n power supplies is faulty, a PD that can be supported by a PoE power supply in the power supply module, and a corresponding port number. An example in which n is 2 is used. The power supply module has two power supplies: the power supply X and the power supply Y. PoE power supply power of the power supply X is W₁, and PoE power supply power of the power supply Y is W₂. If 1 is used to indicate that a value of a power supply fault condition of each power supply of the power supply X and the power supply Y is normal, and 0 is used to indicate that the value of the power supply fault condition of each power supply of the power supply X and the power supply Y is faulty, a power supply fault condition {the power supply X, the power supply Y} of the power supply module has four values: {0,0}, {0,1}, {1,0}, and {1,1}. If both the power supply X and the power supply Y are faulty, that is, the power supply fault condition of the power supply module is {0,0}, no power is supplied to all PDs. Therefore, a power supply table corresponding to that the power supply fault condition of the power supply module 110 is that all power supplies are faulty, that is, {0,0}, may not be generated. If both the power supply X and the power supply Y are normal, that is, the power supply fault condition of the power supply module is {1,1}, in this case, PoE power supply power in total is W₁+W₂. According to the PoE power supply power in total W₁+W₂, power class information of each PD, and a priority of each PD, a PD that can be powered and a PD that cannot be powered by the PoE power supply power in total W₁+W₂ are determined. For example, PD priorities from high to low in sequence are a port 3, a port 2, a port 1, a port 4......a port N-y, a port N-x, and a port N (x and y are any integers less than N), a sum of power of PDs corresponding to the port 3, the port 2, the port 1, the port 4......the port N-y is less than W₁+W₂, and a sum of power of PDs corresponding to the port 3, the port 2, the port 1, the port 4......the port N-y, and the port N-x is greater than W₁+W₂. Then, the PoE power supply power W₁+W₂ can supply power to PDs whose port numbers correspond to the port 3, the port 2, the port 1, the port 4......the port N-y, and in the power supply table, power-on statuses of the port 3, the port 2, the port 1, the port 4......the port N-y are indicated by "ON". The PoE power supply power W₁+W₂ cannot supply power to PDs whose port numbers correspond to the port N-x......the port N. In the power supply table, power-off statuses of the port N-x......the port N are indicated by "OFF". Then, the power supply table shown in FIG. 3a may be generated. If the power supply X is normal and the power supply Y is faulty, that is, the power supply fault condition of the power supply module is {1,0}, in this case, the PoE power supply power in total is W₁. According to the PoE power supply power in total W₁, the power class information of each PD, and the priority of each PD, a PD that can be powered and a PD that cannot be powered by the PoE power supply power in total W₁ are determined. For example, a sum of power of PDs corresponding to the port 3 and the port 2 is less than W₁, and a sum of power of PDs corresponding to the port 3, the port 2, and the port 1 is greater than W₁. Then, the PoE power supply power W₁ can supply power to PDs whose port numbers correspond to the port 3 and the port 2. In the power supply table, power-on statuses of the port 3 and the port 2 are indicated by "ON", and the PoE power supply power W₁ cannot supply power to the PDs corresponding to the port 1, the port 4......the port N-y, the port N-x, and the port N. In the power supply table, power-off statuses of the port 1, the port 4......the port N-y, the port N-x, and the port N are indicated by "OFF", and the power supply table shown in FIG. 3b may be generated. If the power supply X is faulty and the power supply Y is normal, that is, the fault condition of the power supply module is {0,1}, in this case, the PoE power supply power in total is W₂. According to the PoE power supply power in total W₂, the power class information of each PD, and the priority of each PD, a PD that can be powered and a PD that cannot be powered by the PoE power supply power in total W₂ are determined. For example, a sum of power of PDs corresponding to the port 3, the port 2, and the port 1 is less than W₂, and a sum of power of PDs corresponding to the port 3, the port 2, the port 1, and the port 4 is greater than W₂. Then, the PoE power supply power W₂ can supply power to PDs whose port numbers correspond to the port 3, the port 2, and the port 1. In the power supply table, power-on statuses of the port 3, the port 2, and the port 1 are indicated by "ON", and the PoE power supply power W₂ cannot supply power to the PDs corresponding to the port 4......the port N-y, the port N-x, and the port N. In the power supply table, power-off statuses of the port 4......the port N-y, the port N-x, and the port N are indicated by "OFF". Then, the power supply table shown in FIG. 3c may be generated. The processor sends the foregoing power supply table to the logic device. The process of creating a power supply table may further include:
The processor sends related parameters for generating a power supply tables to the logic device, and the logic device computes and obtains the power supply table.
After acquiring the PoE power supply power and the PD power, the processor sends the PoE power supply power and the PD power to the logic device, and at the same time, sends the port number and the port priority to the logic device. The logic device obtains, through computation, the power supply table according to the foregoing parameter information received.
In the foregoing two types of processes of generating a power supply table, the processor may acquire the port number and the port priority by using the following two manners:
(1) A user preconfigures the port priority, and stores the priority information including the port priority in a device that includes the power supply processing circuit. For example, the priority information indicates that priorities of ports 1 to 5 are highest, priorities of ports 6 to 15 are moderate, and priorities of ports 16 to 20 are lowest. The processor may implement recognition of the port number by using cabling and logical code of the logic device during layout.
(2) The user stores priority information of a PD in the PD. When the PD accesses a port, the PD communicates with a PSE, so that the PSE acquires the priority information stored in the PD. The PD may use the Link Layer Discovery Protocol (English: Link Layer Discovery Protocol, LLDP for short) to send the priority to the PSE.
Therefore, by applying the power sourcing equipment and method according to the embodiments of the present invention, an output end that is of a power supply module and for outputting a power supply alarm signal is connected to an input end of a logic device, an output end of the logic device is connected to a first input end of the control signal superimposer, a PSE chip module is connected to a second input end of the control signal superimposer, and an output end of the control signal superimposer is connected to a switch circuit; the power supply module has multiple power supplies, and outputs a power supply alarm signal to the logic device when at least one of the multiple power supplies is faulty; the logic device acquires, according to the power supply alarm signal, a power supply table corresponding to a power supply fault condition of the power supply module, the power supply table include a power-on or power-off status of a PD, and a first signal about the power-on or power-off status is sent to the first input end of the control signal superimposer; the control signal superimposer superimposes, according to the first signal of the power-on or power-off status sent by the logic device, with a second signal of a power-on or power-off status sent by the PSE chip module, and outputs a superimposing result to the switch circuit; and the switch circuit controls, according to the superimposing result, power supply of the power supply module to the PD. This implements that when power of a system power supply of the PSE equipment is insufficient, power supply is preferentially ensured for a PD device with a high priority, and a PD is powered off according to a priority from low to high. On one hand, this avoids that power-off of an entire network is caused by a fault of a part of power supplies of the PSE. On the other hand, when a system can meet only a power requirement of some PDs, a power supply requirement is ensured for a PD with a high priority.
The foregoing specific embodiments clarify the objective, technical solutions, and benefits of the present invention in detail. It should be understood that the foregoing descriptions are merely specific embodiments of the present invention, but are not intended to limit the protection scope of the present invention. Any modification, equivalent replacement, or improvement made without departing from the present invention should fall within the protection scope of the present invention.

## Claims

1. A piece of power sourcing equipment, wherein the equipment comprises a power supply module, a logic device, a PSE chip module, a control signal superimposer, and a switch circuit, wherein:
an output end that is of the power supply module and for outputting a power supply alarm signal is connected to an input end of the logic device, an output end of the logic device is connected to a first input end of the control signal superimposer, the PSE chip module is connected to a second input end of the control signal superimposer, and an output end of the control signal superimposer is connected to the switch circuit; and
the power supply module has multiple power supplies, and outputs a power supply alarm signal to the logic device when at least one of the multiple power supplies is faulty; the logic device acquires, according to the power supply alarm signal, a power supply table corresponding to a power supply fault condition of the power supply module, the power supply table comprises a power-on or power-off status of a powered device PD, and a first signal about the power-on or power-off status is sent to the first input end of the control signal superimposer; the control signal superimposer superimposes the first signal of the power-on or power-off status sent by the logic device, with a second signal of a power-on or power-off status sent by the PSE chip module, and outputs a superimposing result to the switch circuit; and the switch circuit controls, according to the superimposing result, power supply of the power supply module to the PD.

2. The power sourcing equipment according to claim 1, wherein the number of power supply tables is multiple, each of the power supply tables corresponds to one of a set of power supply fault conditions of the power supply module, each of the power supply tables comprise multiple port numbers, and a power-on or power-off status of a PD corresponding to each port number among the multiple port numbers.

3. The power sourcing equipment according to claim 1 or 2, wherein the power sourcing equipment further comprises a processor, and the power supply tables are sent by the processor to the logic device; or
the power supply tables are generated by the logic device through computation.

4. The power sourcing equipment according to any one of claims 1 to 3, wherein the control signal superimposer is an AND gate.

5. The power sourcing equipment according to any one of claims 1 to 4, wherein the switch circuit is one or multiple of: a metal-oxide-semiconductor field-effect transistor, MOSFET, a junction gate field-effect, JFET, and a bipolar junction transistor, BJT.

6. The power sourcing equipment according to any one of claims 1 to 5, wherein the equipment comprises multiple network interface connectors, the number of the network interface connectors is the same as the number of ports of the logic device, the number of the network interface connectors is the same as the number of the switch circuits, the number of the network interface connectors is the same as a sum of the numbers of output ends of all PSE chips in the PSE chip module, and the number of the network interface connectors is the same as the number of the control signal superimposers.

7. A power supply method, applied to a piece of power sourcing equipment, wherein the power sourcing equipment comprises a power supply module, a logic device, a PSE chip module, a control signal superimposer, and a switch circuit, and the method comprises:
connecting to, by an output end that is of the power supply module and for outputting a power supply alarm signal, an input end of the logic device; connecting to, by an output end of the logic device, a first input end of the control signal superimposer; connecting to, by the PSE chip module, a second input end of the control signal superimposer; and connecting to, by an output end of the control signal superimposer, the switch circuit; and
having, by the power supply module, multiple power supplies, and outputting a power supply alarm signal to the logic device when at least one of the multiple power supplies is faulty; acquiring, by the logic device, according to the power supply alarm signal, a power supply table corresponding to a power supply fault condition of the power supply module, wherein the power supply table comprises a power-on or power-off status of a PD; sending a first signal about the power-on and power-off status to the first input end of the control signal superimposer; superimposing, by the control signal superimposer, the first signal of the power-on or power-off sent by the logic device, with a second signal of a power-on or power-off status sent by the PSE chip module, and outputting a superimposing result to the switch circuit; and controlling, by the switch circuit, according to the superimposing result, power supply of the power supply module to the PD.

8. The power supply method according to claim 7, wherein the power sourcing equipment further comprises a processor, and the method further comprises:
acquiring, by the processor, PoE power supply power and PD power; determining, according to PoE power supply power that corresponds to each type of the power supply fault condition, PD power, and a priority of each PD, a power-on or power-off status of a PD corresponding to each type of the power supply fault condition; generating multiple power supply tables; and sending, by the processor, the multiple power supply tables to the logic device; or
acquiring, by the processor, PoE power supply power and PD power; obtaining, by the processor, according to a priority of each PD and a correspondence between each PD and each port, a priority of each port; sending, to the logic device, PoE power supply power, PD power, and a port number that correspond to each type of the power supply fault condition, and the priority of each port; determining, by the logic device, according to the PoE power supply power, the PD power, and the port number that correspond to each type of the power supply fault condition, and the priority of each port, a power-on or power-off status of a PD corresponding to each type of the power supply fault condition; and generating, by the logic device, multiple power supply tables.

9. The power supply method according to claim 8, wherein the acquiring, by the processor, PoE power supply power specifically comprises:
acquiring, by the processor, the PoE power supply power by sending a query instruction to each power supply in the power supply module, or reading, by the processor, PoE power supply power preset in a non-volatile memory, NVM.

10. The power supply method according to claim 8, wherein the method further comprises:
preconfiguring, by a user, the priority of the port, storing the priority in the power sourcing equipment, and implementing, by the processor, recognition of the port number by using cabling and logical code of the logic device during layout; and
storing, by the user, priority information of the PD in the PD, and acquiring, by the PSE, the priority stored in the PD when the PD communicates with the PSE.
